# EUROPEAN PATENT APPLICATION

(11) **EP 2 611 140 A2**
(43) Date of publication of application: **03.07.2013**
(21) Application number: 12188325.0
(22) Date of filing: 12.10.2012
(51) Int. Cl.: H04N 5/232

(54) **Method of Controlling Image Quality and an Image Capturing Apparatus applying the Same**

(30) Priority: 26.12.2011 KR 20110142296
(71) Applicant: Samsung Electronics Co., Ltd., Suwon-si, Gyeonggi-do, 443-742 (KR)
(72) Inventor: CHOI, Juang-hwan, Suwon-si (KR)
(74) Representative: Waddington, Richard

(57) **Abstract**

A method of controlling an image quality, and an image capturing apparatus to apply the method. The method of controlling an image quality may include displaying a plurality of image quality adjustment items; selecting at least one of the plurality of image quality adjustment items; if the selection of the image quality adjustment item is completed, displaying a live view; if an image quality adjustment command is input, adjusting a set value of the selected image quality adjustment item and displaying the live view to which the adjusted set value has been applied; if an image quality determination command is input, storing the adjusted set value; and displaying the live view of which the image quality has been adjusted according to the stored set value. A user can confirm in real time the change of an image quality adjustment item through a live view, and thus can select an image having an image quality desired by the user.

## Description

### BACKGROUND OF THE INVENTION

### 1. Field of the Invention

The present inventive concept relates generally to a method of controlling an image quality and an image capturing apparatus applying the same, and more particularly to a method of controlling an image quality and an image capturing apparatus that applies the same, which can set an image quality of an image that a user intends to capture.

### 2. Description of the Related Art

Various image capturing apparatus support live views using display units such as LCDs. Accordingly, in the case of adjusting an image quality of an image to be captured, the adjusted image quality is reflected in the live view, and thus a user can capture the image after confirming the image quality reflected in the live view.

In the case of an image capturing apparatus in the related art, in order to adjust the image quality, a user first adjusts the image quality in an image quality adjustment menu, and then returns to an image capturing mode. Thereafter, the user confirms the image to which the adjusted image quality has been applied using the live view in the image capturing mode. However, if the user is not satisfied with the adjusted image quality, it is required for the user to enter the image quality adjustment menu again to re-adjust the image quality.

Accordingly, there is a need for schemes to confirm in real time image quality adjustment items that the user intends to adjust.

### SUMMARY OF THE INVENTION

The present inventive concept addresses the above problems and/or disadvantages and provides at least the features as described below. Accordingly, the present inventive concept provides a method of controlling an image quality and an image capturing apparatus that applies the same, which enable a user to confirm in real time a live-view screen to which a set value of at least one image quality adjustment item has been applied in the case where a user changes the at least one image quality adjustment item.

According to the present invention there is provided an apparatus and method as set forth in the appended claims. Other features of the invention will be apparent from the dependent claims, and the description which follows.

Additional features and utilities of the present general inventive concept will be set forth in part in the description which follows and, in part, will be obvious from the description, or may be learned by practice of the general inventive concept.

In an exemplary embodiment of the present inventive concept, a method of controlling an image quality in an image capturing apparatus includes displaying a plurality of image quality adjustment items; selecting at least one of the plurality of image quality adjustment items; if the selection of the image quality adjustment item is completed, displaying a live view; if an image quality adjustment command is input, adjusting a set value of the selected image quality adjustment item and displaying the live view to which the adjusted set value has been applied; if an image quality determination command is input, storing the adjusted set value; and displaying the live view of which the image quality has been adjusted according to the stored set value.

The set value of the selected image quality adjustment item may be automatically adjusted according to a preset pattern.

If one of the plurality of image quality adjustment items is selected, the set value of the selected image quality adjustment item may be automatically adjusted according to a preset pattern.

The method of controlling an image quality according to the aspect of the present invention may further include: if the selection of the image quality adjustment item is completed and the image quality adjustment command is input, displaying a UI to adjust the set value of the selected image quality adjustment item, wherein the set value of the selected image quality adjustment item is adjusted according to a user command and is displayed on the UI.

The method of controlling an image quality according to the aspect of the present invention may further include: if two of the plurality of image quality adjustment items are selected and the image quality adjustment command is input, displaying a two-dimensional UI for the two selected image quality adjustment items, wherein the set values of the two selected image quality adjustment items are collectively adjusted according to a user command and are displayed on the two-dimensional UI.

The user command may be operated by a dial button that is provided on the image capturing apparatus.

An adjustment range and an adjustment pattern of the set value of the image quality adjustment item may differ for each image capturing mode.

The image quality adjustment command may be a selection of an image quality adjustment button that is provided on the image capturing apparatus, and the image quality determination command may be a reselection of the image quality adjustment button.

The image quality adjustment command may be a selection of an image quality adjustment button that is provided on the image capturing apparatus, and the image quality determination command may be an input of a full-press shutter for taking a picture.

The plurality of image quality adjustment items may include at least two of an item to adjust brightness, an item to adjust contrast, an item to adjust an exposure value, an item to adjust sharpness, an item to adjust white balance, and an item to adjust saturation.

In another exemplary embodiment of the present inventive concept, an image capturing apparatus includes a display unit; a user input unit to receive an input of a user command; and a control unit to display a plurality image quality adjustment items on the display unit, to display a live view if at least one of the plurality of image quality adjustment items is selected, to adjust a set value of the selected image quality adjustment item and to display the live view to which the adjusted set value has been applied if an image quality adjustment command is input while the live view is displayed, to store the adjusted set value if an image quality determination command is input, and to display the live view of which the image quality has been adjusted according to the stored set value.

The set value of the selected image quality adjustment item may be automatically adjusted according to a preset pattern.

If one of the plurality of image quality adjustment items is selected, the control unit may automatically adjust the set value of the selected image quality adjustment item according to a preset pattern.

If the selection of the image quality adjustment item is completed and the image quality adjustment command is input, the control unit may control the display unit to display a UI for adjusting the set value of the selected image quality adjustment item, to adjust the set value of the selected image quality adjustment item according to the user command, and to display the adjusted set value on the UI.

If two of the plurality of image quality adjustment items are selected and the image quality adjustment command is input, the control unit may control the display unit to display a two-dimensional UI for the two selected image quality adjustment items, to collectively adjust the set values of the two selected image quality adjustment items according to the user command, and to display the adjusted set values on the two-dimensional UI.

The user command may be operated by a dial button that is provided on the image capturing apparatus.

An adjustment range and an adjustment pattern of the set value of the image quality adjustment item may differ for each image capturing mode.

The image quality adjustment command may be a selection of an image quality adjustment button that is provided on the image capturing apparatus, and the image quality determination command may be a reselection of the image quality adjustment button.

The image quality adjustment command may be a selection of an image quality adjustment button that is provided on the image capturing apparatus, and the image quality determination command may be an input of a full-press shutter for taking a picture.

The plurality of image quality adjustment items may include at least two of an item to adjust brightness, an item to adjust contrast, an item to adjust an exposure value, an item to adjust sharpness, an item to adjust white balance, and an item to adjust saturation.

In another exemplary embodiment of the present inventive concept, a method of controlling image quality in an image capturing apparatus includes: displaying a plurality of image quality adjustment items in an image quality adjustment menu; displaying a live view of an image when one or more of the plurality of image quality adjustment items is selected through a user input; and displaying a live view of the image to which an adjusted set value is applied when an image quality adjustment command is input to adjust a set value of the one or more of the plurality of image quality adjustment items selected.

In an embodiment, the method may further include storing the adjusted set value while displaying the live view of which the image quality has been adjusted according to the stored set value when an image quality determination command is input.

In an embodiment, the user command for displaying the image quality adjustment menu is input through a first user input unit.

In an embodiment, the image quality adjustment command is input through a real-time quality adjustment button.

In an embodiment, the image quality determination command is input by re-selecting the real-time image quality adjustment button.

### BRIEF DESCRIPTION OF THE DRAWINGS

The above and other features and utilities of the present general inventive concept will be more apparent from the following detailed description when taken in conjunction with the accompanying drawings, in which:

FIG. 1 is a block diagram illustrating the configuration of an image capturing apparatus according to an embodiment of the present inventive concept;

FIGS. 2 to 5 are diagrams illustrating a method of adjusting an image quality of an image according to an embodiment of the present inventive concept; and

FIG. 6 is a flowchart illustrating a method of adjusting an image quality according to an embodiment of the present inventive concept.

### DETAILED DESCRIPTION OF THE PREFERRED EMBODIMENTS

Reference will now be made in detail to the embodiments of the present general inventive concept, examples of which are illustrated in the accompanying drawings, wherein like reference numerals refer to the like elements throughout. The embodiments are described below in order to explain the present general inventive concept while referring to the figures.

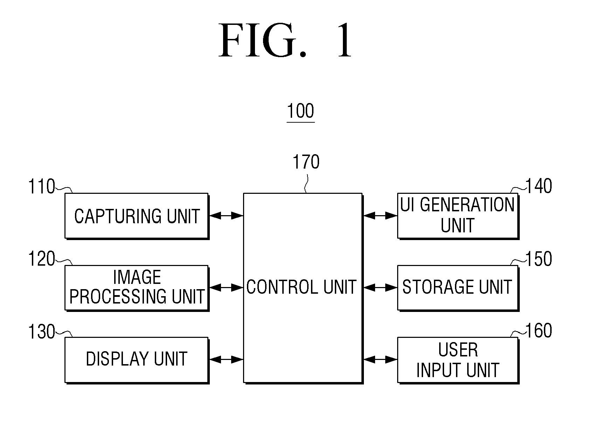

FIG. 1 is a block diagram illustrating the configuration of an image capturing apparatus according to an embodiment of the present inventive concept. As illustrated in FIG. 1, an image capturing apparatus 100 includes a capturing unit 110, an image processing unit 120, a display unit 130, a UI (user interface) generation unit 140, a storage unit 150, a user input unit 160, and a control unit 170. According to an embodiment of the present inventive concept, the image capturing apparatus 100 may be a digital camera. However, the image capturing apparatus 100 is not limited thereto, and may be implemented by a mobile phone, a PDA, a tablet PC, a camcorder, or a TV, which contains the capturing unit.

The capturing unit 110 may include a shutter, a lens unit, an iris, a CCD (Charge Coupled Device) image sensor, and an ADC (Analog/Digital Converter). The shutter is a mechanism that adjusts the quantity of exposure light along with the iris. The lens unit processes an image through reception of light from an external light source. In this case, the iris adjusts the quantity of incident light (incident light quantity) according to the degree of opening/closing thereof. The CCD image sensor accumulates the light quantity input through the lens unit, and outputs an image captured by the lens unit according to the accumulated light quantity to match a vertical synchronization signal. The image acquisition through the image capturing apparatus 100 is performed by the CCD image sensor which converts the light that is reflected from an object into an electrical signal. In order to obtain a color image using the CCD image sensor, a color filter is necessary, and a filter that is called a CFA (Color Filter Array) is mostly used. The CFA has a regularly arranged structure to pass therethrough only the light that indicates one color for each pixel, and various types of CFAs may be provided according to their arrangement structures. The ADC converts an analog image signal output from the CCD image sensor into a digital signal.

On the other hand, the image capturing process through the capturing unit 110 as described above is merely exemplary, and the image may be captured by other methods. For example, the image may be captured using a CMOS (Complementary Metal Oxide Semiconductor) image sensor rather than the CCD image sensor.

The image processing unit 120 performs signal processing so that the digital-converted raw data can be displayed under the control of the control unit 170. The image processing unit 120 removes a black level that is caused by arm current generated in the CCD image sensor that is sensitive to temperature change and the CFA filter. The image processing unit 120 performs gamma correction to encode information to meet the non-linearity of a human viewing angle. The image processing unit 120 performs CFA interpolation that interpolates a Bayer pattern implemented by a RGRG line and a GBGB line of predetermined gamma-corrected data. The image processing unit 12 converts the interpolated RGB signal into a YUV signal, performs edge compensation to process a clear image through filtering of a Y signal through a high band-pass filter and color correction for correcting color values of U and V signals using a standard color coordinate system, and removes noises thereof. The image processing unit 120 compresses and processes the noise-removed Y, U, and V signals to generate a JPEG file, which is displayed through the display unit 130 and is stored in the storage unit 150.

On the other hand, the above-described image processing through the image processing unit 120 is merely exemplary, and the image may be processed by other methods.

The display unit 130 displays image data processed by the image processing unit 120 or image data stored in the storage unit 150. Further, the display unit 130 displays a GUI generated by the GUI generation unit 140. In particular, the display unit 130 may display a thumbnail image list that includes a plurality of thumbnail images that correspond to a plurality of image data under the control of the control unit 170.

The UI generation unit 140 generates a UI in the form of an OSD (On Screen Display) under the control of the control unit 170.

The storage unit 150 stores therein programs to drive the image capturing apparatus 100 and data, and stores image data processed by the image processing unit 120. Further, the storage unit 150 stores information on an image that is analyzed by the control unit 170.

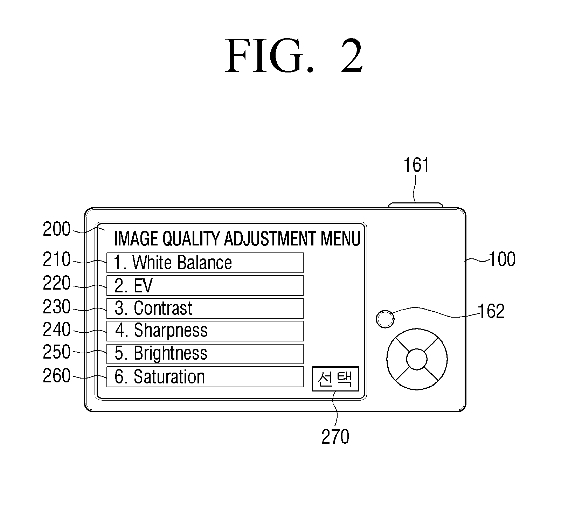

The user input unit 160 receives an input of a user command. In this case, the user input unit 160 may be implemented by a shutter 161 (see FIG. 2) provided on the outside of the image capturing apparatus 100, buttons, and/or a touch screen. Further, the user input unit 160 may include a real-time image quality adjustment button 162 to enter into a mode to adjust an image quality adjustment item selected by the user.

The control unit 170 controls the whole operation of the image capturing apparatus 100 according to the user command input through the user input unit 160. In particular, the control unit 170 displays a plurality of image quality adjustment items on the display unit 130. Then, if at least one of the plurality of image quality adjustment items is selected through the user input unit 160, the control unit 170 displays a live view of an image. Then, if an image quality adjustment command is input while the live view of an image is displayed, the control unit 170 adjusts a set value of the selected image quality adjustment item. Then, the control unit 170 displays the live view to which the adjusted set value has been applied. If an image quality determination command is input, the control unit 170 stores the adjusted set value, and displays the live view of which the image quality has been adjusted according to the stored set value.

Hereinafter, referring to FIGS. 2 to 5, a method of adjusting an image quality, whereby an image quality adjustment state can be confirmed in real time, will be described.

If a user command to generate an image quality adjustment menu 200 is input through the user input unit 160, the control unit 170 illustrated in FIG. 1 generates the image quality adjustment menu 200 as illustrated in FIG. 2. In this case, the image quality adjustment menu 200 is a menu to select at least one of the image quality items for the user to adjust the image quality, and includes a plurality of image quality adjustment items. The plurality of image quality adjustment items may include, for example, an item 210 to adjust a white balance, an item 220 to adjust an exposure value, an item 230 to adjust a contrast, an item 240 to adjust a sharpness, an item 250 to adjust a brightness, and an item 260 to adjust a saturation. Further, the image quality adjustment menu 200 includes a selection item 270 to select the item when the selection of the menu that the user intends to adjust is completed.

If at least one of the plurality of image quality adjustment items included in the image quality adjustment menu is selected through the user input unit 160, the control unit 170 may display the selected image quality adjustment item in distinction to the unselected image quality adjustment items. For example, the control unit 170 may display the selected image quality adjustment item by highlighting such item for distinction over the items not selected.

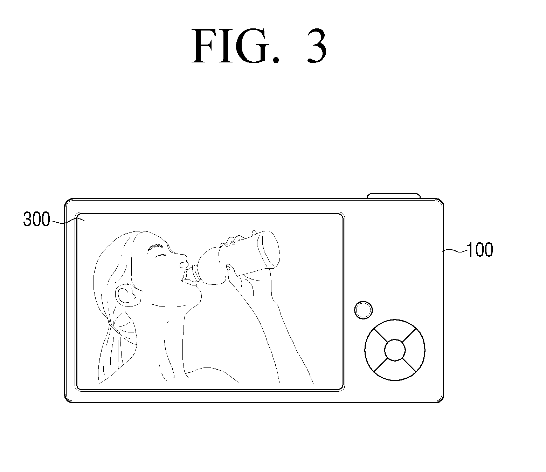

If the at least one of image quality adjustment items that the user intends to adjust is selected and the user command for the selection item 270 (for example, touch of the selection item 270) is input, the control unit 170 stores information on the at least one selected image quality adjustment item in the storage unit 150, and displays a live view 300 as illustrated in FIG. 3.

If the image quality adjustment command is input while the live view 300 is displayed, the control unit 170 displays the live view to which the adjusted set value has been applied while adjusting the set value of the selected image quality adjustment item. Here, the image quality adjustment command is a user command that is input by pressing a real-time image quality adjustment button 162 as illustrated in FIG. 2. However, this is merely exemplary, and the image quality adjustment command may be input through other menu screens.

Specifically, the control unit 170 may automatically adjust the set value of the selected image quality adjustment item in a preset pattern. For example, if the selected image quality adjustment item is a brightness adjustment item 250 and the real-time image quality adjustment button 162 is selected while the live view is displayed, the control unit 170 automatically adjusts the set value of brightness of the live view with the preset pattern. If the brightness set value range is 0 to 100, and the currently set brightness value is 50, the control unit 170 can change the brightness set value of the live view in such a pattern as 50→49→51→48→52→47→53... at predetermined intervals (for example, at intervals of one second).

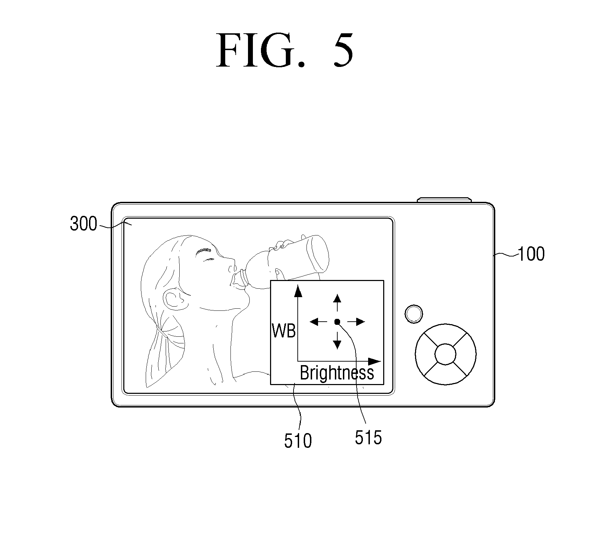

Further, in the case of selecting a plurality of image quality adjustment items, the control unit 170 may automatically adjust the set values of the selected image quality adjustment items with the preset pattern. That is, the control unit 170 may automatically adjust the plurality of image quality adjustment items at the same time with the preset pattern. For example, if two image quality adjustment items are selected, as illustrated in FIG. 5, in a state where a two-dimensional image quality adjustment UI 510 is displayed, the control unit 170 may first provide recommended set values 515 for the two image quality adjustment items, and adjust the image quality as moving in a spiral.

In particular, the control unit 170 may differently set the adjustment range and the adjustment pattern of the set value of the image quality adjustment item for each image capturing mode. For example, the control unit 170 may set the adjustment range and the adjustment pattern of the set value of the image quality adjustment item in a scenery mode differently from those in a character mode. This is because the ranges and the conditions of the set values of the image quality adjustment items to be set for the respective modes of the image capturing apparatus 100 differ from each other.

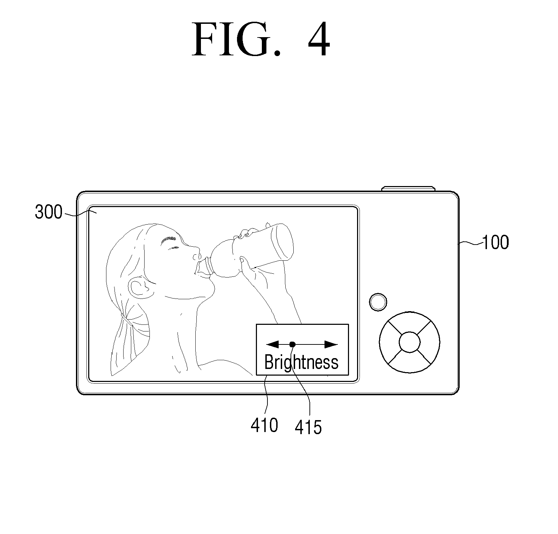

Further, the control unit 170 may adjust the set value of the selected image quality adjustment item according to the user command input through the user input unit 160. For example, the control unit 170 may adjust the image quality using image quality adjustment UIs 410 and 510 as illustrated in FIGS. 3 and 4 and using a dial or an adjustment button separately provided on the outside.

Further, the control unit 170 adjusts the set value of the selected image quality adjustment item and displays the live view to which the adjusted set value has been applied as well.

In this case, in order for the user to confirm the adjustment state of the set value of the selected image quality adjustment item, the control unit 170 may display an image quality adjustment UI that indicates the set value of the image quality adjustment item that is currently applied to the live view.

For example, if the brightness adjustment item 250 is selected in the image quality adjustment menu 200, the control unit 170, as illustrated in FIG. 4, provides a one-dimensional image quality adjustment UI 410. For another example, if the white balance adjustment item 210 and the brightness adjustment item 250 are selected in the image quality adjustment menu 200, the control unit 170, as illustrated in FIG. 5, provides a two-dimensional image quality adjustment UI 510.

The image quality adjustment UI 510 displays the set value of the image quality adjustment item that is currently applied to the live view, and as described above, operates as a UI that receives the user command to adjust the set value of the image quality adjustment item as well.

On the other hand, in the above-described embodiment, it is exemplified that one or two image quality adjustment items can be selected. However, this is merely exemplary, and the image quality adjustment UI may be provided in the case where three or more image quality adjustment items can be selected. For example, in the case where three image quality adjustment items are selected, the control unit 170 may provide a three-dimensional image quality adjustment UI, and in the case where four or more image quality adjustment items are selected, the control unit 170 may generate a number of one-dimensional image quality adjustment UIs, the number of which corresponds to the number of selected image quality adjustment items.

As described above, if the user inputs the image quality determination command in a state where an image with image quality desired by the user is displayed through the live view through an automatic or manual adjustment of the set value of the image quality adjustment item, the control unit 170 stores the adjusted set value at a time point where the image quality determination command is input. Further, the control unit 170 interrupts the adjustment operation for the image quality adjustment item, and displays the live view of which the image quality is adjusted according to the stored set value.

The image quality determination command may be a command that is input by re-selecting the real-time image quality adjustment button 162. However, this is merely exemplary, and the image quality determination command may be input in other methods. For example, the image quality determination command may be a command that is input by a full-press of the shutter 161.

If a half-press shutter command is input to the shutter 161 in a state where the image quality determination command is the command that is input by the full-press shutter, the control unit 170 fixes the adjusted set value of the image quality adjustment item. If the full-press shutter command is input, the control unit 170 captures the live view that is currently displayed to store the captured live view in the storage unit 150, and stores the set value of the image quality adjustment item in the storage unit 150 when the full-press shutter command is input. Further, the control unit 170 interrupts the adjustment operation for the image quality adjustment item, and displays again the live view of which the image quality is adjusted according to the stored set value.

According to the image capturing apparatus 100 as described above, the user can select the image having the image quality desired by the user by confirming in real time the change of the image quality adjustment item through the live view.

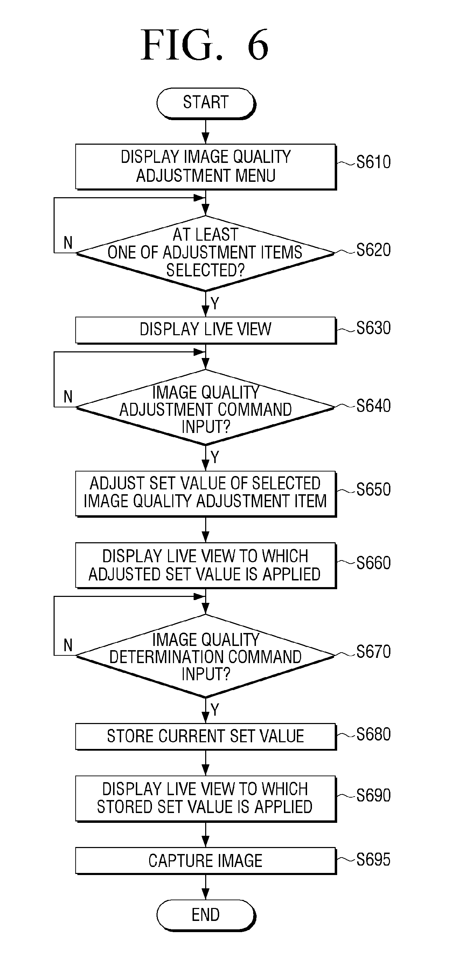

Hereinafter, referring to FIG. 6, a method for adjusting an image quality in the image capturing apparatus 100 will be described in more detail.

First, the image capturing apparatus 100 displays the image quality adjustment menu 200 for selecting the image quality adjustment item that the user intends to adjust (operation S610). At this time, the image quality adjustment menu 200 may include a plurality of image quality adjustment items.

Then, the image capturing apparatus 100 determines whether at least one image quality item is selected through the user input unit 160 (operation S620).

If at least one of the plurality of image quality adjustment items is selected (operation S620-Y), the image capturing apparatus 100 displays a live view (operation S630).

Then, the image capturing apparatus 100 determines whether an image quality adjustment command is input while the live view is displayed (operation S640). For example, the image quality adjustment command may be a command input at a real-time image quality adjustment menu button 162 that is provided in the image capturing apparatus 100.

If the image quality adjustment command is input (operation S640-Y) while the live view is displayed, the image capturing apparatus 100 adjusts a set value of the selected image quality adjustment item (operation S650). At this time, the image capturing apparatus 100 may automatically adjust the set value of the selected image quality adjustment item according to a preset pattern. Further, the image capturing apparatus 100 may adjust the set value of the selected image quality adjustment item according to a user's operation input through the user input unit 160.

Then, the image capturing apparatus 100 displays the live view to which the adjusted set value has been applied in real time. In this case, the image capturing apparatus 100 may also display an image quality adjustment UI for confirming the state where the set value of the image quality adjustment item is adjusted.

While the set value of the image quality adjustment item is adjusted and the live view to which the adjusted set value is applied is displayed, the image capturing apparatus 100 determines whether an image quality determination command is input (operation S670). AT this time, the image quality determination command may be a command for re-selecting the real-time image quality adjustment menu 162 or a full-press shutter command.

Further, if the image quality determination command is input (operation S670-Y), the image capturing apparatus 100 stores the current set value (operation S680). At this time, the current set value may be a set value at a time point where the image quality determination command is input.

Further, the image capturing apparatus 100 interrupts the image quality adjustment operation, and displays the live view to which the stored set value of the image quality adjustment item is applied (operation S690).

Then, the image capturing apparatus 100 captures an image based on the stored set value of the image quality adjustment item (operation S695).

By the method of adjusting the image quality as described above, the user can select an image having the image quality desired by the user by confirming in real time the change of the image quality adjustment item through the live view.

Program codes to perform the method of adjusting an image quality according to diverse embodiments of the present invention as described above may be stored in diverse types of recording media. Specifically, the program codes may be stored in diverse types of terminal-readable recording media, such as a RAM (Random Access Memory), a flash memory, a ROM (Read Only Memory), an EPROM (Erasable Programmable ROM), an EEPROM (Electrically Erasable and Programmable ROM), a register, a hard disk, a removable disk, a memory card, a USB memory, and a CD-PRM.

Although a few embodiments of the present general inventive concept have been shown and described, it will be appreciated by those skilled in the art that changes may be made in these embodiments without departing from the principles of the general inventive concept, the scope of which is defined in the appended claims and their equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of controlling an image quality in an image capturing apparatus, the method comprising:
displaying a plurality of image quality adjustment items;
selecting at least one of the displayed plurality of image quality adjustment items;
if the selection of the image quality adjustment item is completed, displaying a live view;
if an image quality adjustment command is input, adjusting a set value of the selected image quality adjustment item and displaying the live view to which the adjusted set value has been applied;
if an image quality determination command is input, storing the adjusted set value; and
displaying the live view of which the image quality has been adjusted according to the stored set value.

2. The method of controlling an image quality as claimed in claim 1, wherein the set value of the selected image quality adjustment item is automatically adjusted according to a preset pattern.

3. The method of controlling an image quality as claimed in claim 1 or 2, wherein if one of the plurality of image quality adjustment items is selected, the set value of the selected image quality adjustment item is automatically adjusted according to a preset pattern.

4. The method of controlling an image quality as claimed in any one of claims 1 to 3, further comprising:
if the selection of the image quality adjustment item is completed and the image quality adjustment command is input, displaying a UI to adjust the set value of the selected image quality adjustment item,
wherein the set value of the selected image quality adjustment item is adjusted according to a user command and is displayed on the UI.

5. The method of controlling an image quality as claimed in any one of claims 1 to 4, further comprising:
if two of the plurality of image quality adjustment items are selected and the image quality adjustment command is input, displaying a two-dimensional UI for the two selected image quality adjustment items,
wherein the set values of the two selected image quality adjustment items are collectively adjusted according to a user command and are displayed on the two-dimensional UI.

6. The method of controlling an image quality as claimed in claim 5, wherein the user command is operated by a dial button that is provided on the image capturing apparatus.

7. The method of controlling an image quality as claimed in any one of claims 1 to 6, wherein an adjustment range and an adjustment pattern of the set value of the image quality adjustment item differ for each image capturing mode.

8. The method of controlling an image quality as claimed in any one of claims 1 to 7, wherein the image quality adjustment command is a selection of an image quality adjustment button that is provided on the image capturing apparatus, and
the image quality determination command is a reselection of the image quality adjustment button.

9. The method of controlling an image quality as claimed in any one of claims 1 to 7, wherein the image quality adjustment command is a selection of an image quality adjustment button that is provided on the image capturing apparatus, and
the image quality determination command is an input of a full-press shutter for taking a picture.

10. The method of controlling an image quality as claimed in any one of claims 1 to 9, wherein the plurality of image quality adjustment items include at least two of an item to adjust brightness, an item to adjust contrast, an item to adjust an exposure value, an item to adjust sharpness, an item to adjust white balance, and an item to adjust saturation.

11. An image capturing apparatus comprising:
a display unit;
a user input unit to receive an input of a user input command; and
a control unit to display a plurality image quality adjustment items on the display unit, to display a live view if at least one of the plurality of image quality adjustment items is selected, to adjust a set value of the selected image quality adjustment item and to adjust the live view to which the adjusted set value has been applied if an image quality adjustment command is input while the live view is displayed, to store the adjusted set value if an image quality determination command is input, and to display the live view of which the image quality has been adjusted according to the stored set value.

12. The image capturing apparatus as claimed in claim 11, wherein the set value of the selected image quality adjustment item is automatically adjusted according to a preset pattern.

13. The image capturing apparatus as claimed in claim 11 or 12, wherein if one of the plurality of image quality adjustment items is selected, the control unit automatically adjusts the set value of the selected image quality adjustment item according to a preset pattern.

14. The image capturing apparatus as claimed in any one of claims 11 to 13, wherein if the selection of the image quality adjustment item is completed and the image quality adjustment command is input, the control unit controls the display unit to display a UI to adjust the set value of the selected image quality adjustment item, to adjust the set value of the selected image quality adjustment item according to the user command, and to display the adjusted set value on the UI.

15. The image capturing apparatus as claimed in any one of claims 11 to 14, wherein if two of the plurality of image quality adjustment items are selected and the image quality adjustment command is input, the control unit controls the display unit to display a two-dimensionai UI for the two selected image quality adjustment items, to collectively adjust the set values of the two selected image quality adjustment items according to the user command, and to display the adjusted set values on the two-dimensional UI.
